# EUROPEAN PATENT APPLICATION

(11) **EP 1 978 529 A2**
(43) Date of publication of application: **08.10.2008**
(21) Application number: 08002340.1
(22) Date of filing: 08.02.2008
(51) Int. Cl.: G21C 3/326

(54) **Use of boron or enriched boron 10 in UO2**

(30) Priority: 04.04.2007 US 732524
(71) Applicant: Westinghouse Electric Company LLC, Monroeville, PA 15146-2866 (US)
(72) Inventor: Lahoda, Edward J., Pittsburgh Pennsylvania 15218 (US); Hallstadius, Lars, 724 81 Vasteras (SE)
(74) Representative: Gallo, Wolfgang

(57) **Abstract**

The present invention provides a plurality of fuel rods (10A - lOD) containing fuel for use in nuclear fuel assembly (17), where an actinide-boron-containing compound or compounds (6B - 6E) is used as a burnable poison and is distributed in the actinide fuel in a majority of fuel containing rods (10A-10C) in the assembly, and where boron or enriched boron is contained in more than 50% of the fuel rods in the assembly (17).

## Description

The present invention relates to fuel rods of a nuclear fuel assembly, to be used in a nuclear power reactor. The fuel rods contain fuel in a form selected from at least one of sintered fuel pellets or sintered fuel particles, each having a boron-containing compound in admixture with nuclear fuel.

In a typical nuclear reactor, such as a pressurized water (PWR), boiling water reactor (BWR) or heavy water reactor (HWR), the reactor core includes a large number of fuel assemblies, each of which is composed of a plurality of elongated fuel elements/rods. The fuel rods each contain fissile material such as uranium dioxide (UO₂), plutonium dioxide (PuO₂), uranium nitride (UN), plutonium nitride (PuN) or mixtures of these, usually in the form of a stack of solid, cylindrical, nuclear fuel pellets, although annular or particle forms of fuel are also used. The fuel rods are grouped together in an array which is organized to provide a neutron flux in the core sufficient to support a high rate of nuclear fission and thus the release of a large amount of energy in the form of heat. A coolant, such as water, or heavy water, is pumped through the core in order to extract the heat generated in the core for the production of useful work. Fuel assemblies vary in size and design depending on the desired size of the core, the size of the reactor, type of reactor and reactor operation approach.

When a new reactor starts, its core is often divided into a plurality, e.g. two or more groups of assemblies which can be distinguished by their position in the core and/or their enrichment level. For example, a first batch or region may be enriched to an isotopic content of 2.0% uranium-235. A second batch or region may be enriched to 2.5% uranium-235, and a third batch may be enriched to 3.5% uranium-235. After about 10-24 months of operation, the reactor is typically shut down and the first fuel batch is removed and replaced by a new batch, usually of a higher level of enrichment (up to a preferred maximum level of enrichment). Note that these batches may also include other fissile actinides at different levels. Subsequent cycles repeat this sequence at intervals in the range of from about 8-24 months. Refueling as described above is required because the reactor fuel assemblies can operate as a nuclear device only so long as it remains a critical mass. Thus, nuclear reactors are provided with sufficient excess reactivity at the beginning of a fuel cycle to allow operation for a specified time period, usually between about six to twenty four months.

Since a reactor operates only slightly supercritical, the excess reactivity supplied at the beginning of a cycle must be counteracted. Various methods to counteract the initial excess reactivity have been devised, including insertion of control rods in the reactor core and the addition of neutron absorbing elements to the fuel rods. Such neutron absorbers, known in the art and referred to herein as "burnable poisons" or "burnable absorbers", include, for example, boron, gadolinium, cadmium, samarium, erbium and europium compounds. During the early stages of operation of such a fuel element, excess neutrons are absorbed by the burnable poison, which preferably undergoes transformation to elements of low neutron cross section, which do not substantially affect the reactivity of the fuel element in the later period of its life when the neutron availability is lower.

Nuclear fuel having an admixture of burnable poison are known. See, for example, US Patents 3,349,152 (Takaaki Watanabe et al.); 3,520,958 (Geert Versteeg, et al.) ; and 4,774,051 (Peehs et al.). However, nuclear fuel pellets containing an admixture of a boron burnable absorber with the fuel have not been used in large land-based reactors due to concerns that boron would react with the fuel, and because the use of boron was thought to create high internal rod pressurization from the accumulation of helium in the reaction:

¹⁰B + ¹n → ¹¹B (excited state) → ⁴He + ⁷Li

In some instances, one practice is to coat the surface of the pellets with a boron-containing compound such as ZrB₂, which avoids any potential reaction with the fuel. However, this does not solve the pressurization problem, which limits the amount of coating that can be contained within each rod. More rods with a lower ¹⁰B loading must be used, thus necessitating the handling and coating of a large number of fuel pellets, which is very expensive and results in high overhead costs. Complex manufacturing operations also result from the need to separate the coated and non-coated fuel manufacturing and assembly operations. In practice, the cost of coating the pellets limits their use, and they are used in as few rods as possible, taking into account the pressurization problem described above. Historically this was acceptable, because fuel cycles were shorter, levels of ²³⁵U enrichment were lower, and overall thermal output of a reactor was lower.

Other compounds such as Gd₂O₃ and Er₂O₃ can be added directly to the pellets, but these are less preferred than boron because they leave a long-lived, high cross-section residual reactive material, and are strong neutron absorbers.

Nuclear reactor core configurations having burnable poisons have been described in the art. For example, US Patent 5,075,075 (Kapil) discloses a nuclear reactor core having a first group of rods containing fissionable material and no burnable absorber and a second group of rods containing fissionable material with a burnable absorber, wherein the number of rods in the first group is larger than the number of rods in the second group. The burnable absorber comprises a combination of an erbium compound and a boron compound. US Patent 5,337,337 (Aoyama et al.) discloses a fuel assembly where fuel rods containing a burnable poison element having a smaller neutron absorption cross-section (such as boron) are placed in a region of the core having soft neutron energy and a large thermal neutron flux, while rods having a burnable poison element having a larger neutron absorption cross-section (such as gadolinium) are placed in regions of the core having average neutron energy spectrum. Neither of these prior patents disclose an arrangement of fuel rods in fuel assemblies in which a majority of fuel rods contain boron alone, as the burnable poison. Neither disclose assembly arrangements suitable for reactors producing over 500 megawatts thermal power.

With the use of longer fuel cycles and higher levels of ²³⁵U enrichment or Pu, there remains a need for the development of nuclear fuels and fuel assemblies having integral burnable absorbers that are cost-effective and can extend the life of the fuel without creating additional reactive materials that absorb neutrons at the end of fuel life.

The present invention solves the above need by providing a plurality of fuel rods, for use in a fuel assembly, each fuel rod containing fuel in a form selected from the group consisting of sintered fuel pellets and sintered fuel particles and mixtures thereof, the fuel surrounded by cladding, wherein at least 50% of the fuel rods comprise a sintered admixture of (1) a non-boron: actinide oxide, actinide carbide or actinide nitride fuel compound, preferably non-boron actinide carbide or nitride and (2) a boron-containing compound selected from the group consisting of BN, B₄C, ZrB₂, TiB₂, MoB₂, UB₂, UB₃, UB₄, UB ₁₂, PuB₂, PuB₄, PuB₁₂, ThB₂, and mixtures thereof, preferably UB₄, UB₁₂, B₄C and BN, most preferably B₄C and BN acting as an integral burnable absorber, wherein, those fuel rods containing the boron compound, will contain from 0.1 mg to 1.5 mg boron as ¹⁰B elemental, per 1 cm of fuel rod length, and; where the same one or multiplicity of actinides compounded with boron is the same as the one or a multiplicity of actinides used without boron.

Due to the fact that boron has a relatively low parasitic cross-section as compared to other burnable absorbers, it will typically be necessary to put boron-containing fuel pellets or particles in more than 50% of the fuel rods. It has been found, contrary to previous assumptions, that boron does not interact with the nuclear fuel, and is not the primary cause of pressure in the fuel rods, when the amount of helium produced is compared to the amounts of other fission gases released during fuel use.

Preparing fuel with an admixture of boron is much less expensive. Therefore, a greater number of rods can have the boron-containing fuel pellets or particles, providing an equal or greater amount of boron in the core but with less boron in each rod, thus avoiding the pressurization problem. This invention, with the use of boron directly in the pellets or particles in fuel rods vs. use of coated pellets, will result in a 25% reduction of ¹⁰B per cm of fuel rod length. The use of sintered particles in this invention is most advantageous when the fuel is made from highly radioactive reprocessed fuel as fewer moving machinery parts, presses and the like are needed.

Thus, using lower levels of a boron-containing compound, in combination with its distribution more widely among the fuel rods, provides the benefits of the present invention. As will be appreciated by one skilled in the art, these benefits are most advantageous when the thermal output of the reactor core is above 500 megawatts thermal, for water-cooled reactors.

By adding either natural or enriched boron as described above, reactivity holddown that is equivalent or superior to that provided by current methods is provided, at much lower cost. Additionally, increasing the number of rods containing boron can reduce the internal fuel rod pressure due to ¹⁰B by a factor of 2 or 3 over that found in current practice.

The use of boron in boiling water reactor fuel as a substitute for the currently employed Gd₂O₃ and Er₂O₃ provides even greater benefits. In addition to simplifying manufacturing and reducing rod pressurization, the space that is taken up by the Gd₂O₃ and Er₂O₃ in the fuel pellets can be replaced by more UO₂ (or other actinide oxide, carbide or nitride), thus allowing more fuel to be loaded in a given size core. Enrichment constraints currently applied on a rod-by-rod basis due to poor thermal conductivity of these rare-earth oxides can be completely avoided, thus yielding a significant simplification in the manufacture of nuclear fuels.

In the course of the following detailed description, reference will be made to the attached drawings in which:

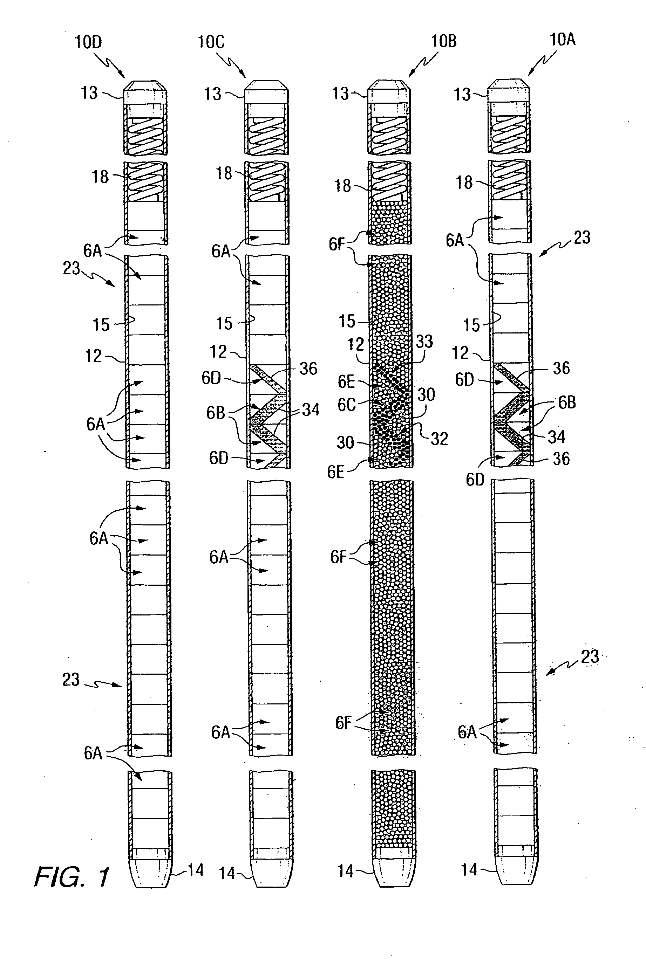

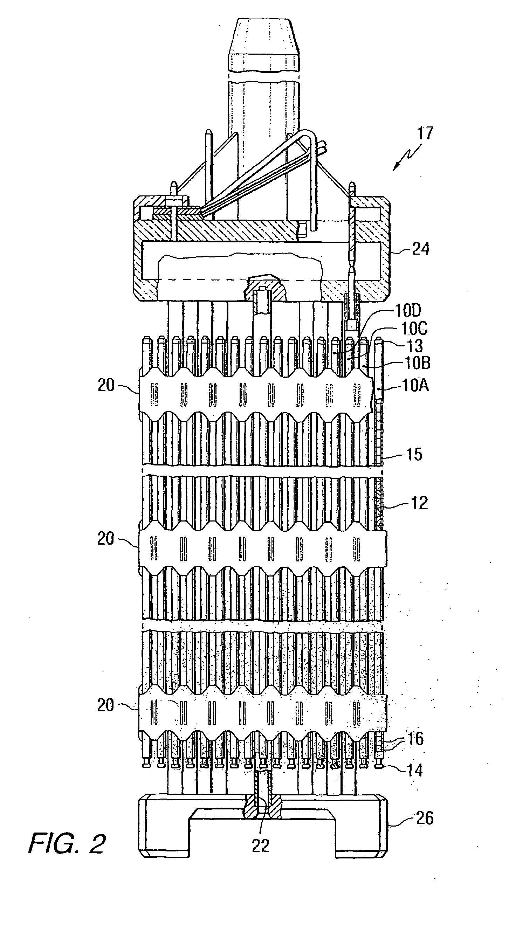

Fig. 1, which best illustrates the invention, is a schematic idealized, enlarged, foreshortened, longitudinal axial sectional view of a plurality of fuel rods, that can be used in a fuel assembly such as shown generally in Fig. 2, where, as shown in Fig. 1, the rods can contain a middle "string" or "strings"of boron-containing fuel pellets or particles, with upper and lower end "strings" of non-boron containing fuel pellets or particles, where, in the figure, the rods are broken into 4 rod sections; and
Fig. 2 is a general elevational view, with fuel rod parts sectioned into 3 sections, not necessarily the same sections as shown in Fig. 1, with, in Fig. 2, parts broken away for clarity; of one type of nuclear fuel assembly that can be used in a variety of nuclear reactors.

Accordingly, the present invention relates to a fuel assembly comprising a plurality of fuel rods, each fuel rod containing fuel in the form, either, of a plurality of nuclear fuel pellets or a plurality/volume of nuclear fuel particles, wherein at least 50% of said fuel rods in said fuel assembly comprise a sintered admixture of (1) an actinite oxide, carbide or nitride, none of which contain boron and (2) a specific boron-containing compound, most preferably B₄C and BN and mixtures thereof. The boron-containing compound functions as the burnable poison in the fuel. The term "fuel pellet" is used herein to denote the individual sintered pellets of fuel that are loaded into a fuel rod. The term "fuel particles" is used herein to denote small sintered particles of fuel that are not in pellet form. Preferably, at least more than 60% to 70%, most preferably 60% to 95% of the fuel rods contain an admixture of non-boron actinide oxide, carbide or nitride and a boron-containing compound. Most preferably all (100%) of the fuel rods will have some amount of the boron containing compound. This major use of boron compounds substantially mitigates pressure due to helium build-up in the rods.

In the rods having fuel as an admixture of non-boron actinide oxide, carbide or nitride and a boron containing compound as previously described, any number of boron-containing fuel pellets or volume of particles can be used, to a maximum of 100% of all the pellets or particles in the rod, as generally stated above.

Boron-containing compounds can be used, so long as they are compatible with the particular nuclear fuel selected and meet fuel specifications as to density, thermal stability, physical stability, and the like. Suitable boron-containing compounds include, BN, B₄C, ZrB₂, TiB₂, MoB₂, UB₂, UB₃, UB₄, UB₁₂, PuB₂, PuB₄, PuB₁₂, ThB₂, and combinations thereof. Preferred boron-containing compounds are UB₄, UB₁₂, B₄C, and BN, and combinations thereof, and most preferred B₄C and BN and combinations (mixtures) thereof.

The admixture of boron-containing compound plus actinide oxide, actinide carbide or actinide nitride is prepared as an admixture and then press and sintered to produce a fuel pellet or processed by rolling, sintering, milling and screening, to provide particles. Natural boron or boron enriched in the ¹⁰B isotope can be used, and any level of enrichment of ¹⁰B above natural levels is suitable. With the use of more enriched boron, the amount of boron-containing compound needed overall decreases proportionally to the level of ¹⁰B increase, allowing a concomitant increase in fuel loading. However, enriched boron is more expensive than natural boron, and the amount of boron enrichment used will be a cost consideration balanced with other aspects of fuel design.

Accordingly, in those fuel rods containing the admixture of (1) non-boron containing actinide compound and, (2) boron-containing compound; the amount of boron-containing actinide compound present in a fuel pellet or equal volume of particles, where the term "volume" of pellets of particles can range from 5x 10⁻³ cubic cm to 3 cubic cm will range between about 5 ppm to about 5 wt%, more preferably between about 10 ppm and 20,000 ppm, based on the total amount of fissionable fuel component in the fuel pellet or particle, the amount used will vary depending on the level of uranium enrichment, the level of boron enrichment, and other factors.

By way of example only, the use of an equal amount of natural boron in all the rods of a batch (if neutronically acceptable) will require boron levels between about 66 ppm and 7,000 ppm, while the use of 100% enriched boron would reduce the level of boron needed to between about 13 ppm and 1200 ppm. It is recognized that the selective boration of individual rods might be preferable neutronically, similar to current poison distribution methods. Fuel rods having fuel pellets or fuel particles with natural boron only, enriched boron only, or a combination of pellets with natural and enriched boron, are all contemplated as being embraced by the present invention. The location of the boron - containing compounds within the fuel rods generally coincide with location of the highest neutron fluxes.

The boron-containing compound can be used with any "suitable nuclear fuel". Examples of "suitable nuclear fuels" include actinide oxides, actinide carbides and actinide nitrides. Exemplary, preferred fuels include actinide oxides including UO₂ PuO₂ ThO₂ and mixtures thereof, actinide carbides including UC, UC₂, PuC₂, ThC₂, (U,P)C₂, (U, P, Th) C₂ and (U, Th) C₂ and mixtures thereof; and actinide nitrides including UN, PuN, ThN, (U,P)N, (U,P,Th)N, (U, Th)N and mixtures thereof. The carbides and nitrides are preferred for a variety of reasons.

The above fuel rods when used in a described fuel assembly, are suitable and economical for use in thermal fission reactors, such as light or heavy water nuclear reactors, including pressurized water reactors (PWR), boiling water reactors (BWR) and pressurized heavy water reactors (PHWR or CANDU). Preferably, the thermal output of the reactor core of any of the above reactor types will be above 500 megawatts thermal in the case of water-cooled reactors.

In the following description, like reference numbers designate like or corresponding parts throughout the views. Also in the following description, it is to be understood that such terms as "forward", "rearward", "left", "right", "upwardly", "downwardly", and the like, are words of convenience and are not to be construed as limiting terms.

As seen in Figs. 1 and 2, fuel rods 10 A, 10B, 10 C and 10D (jointly called 10, and also shown as outer fuel rods 23) of a fuel assembly 17 (shown specifically on Fig. 2) have identical constructions insofar as the fuel rods 10 include an elongated hollow cladding tube 12 with a top end plug 13 and a bottom end plug 14 attached to and sealing opposite ends of the cladding tube 12 defining a sealed chamber (generally shown as) 15. In one instance, where fuel pellets are used as the fuel form, a plurality of nuclear fuel pellets numbered 6A, 6B and 6D in rods 10A and 10C, and 16 in Figure 2, are placed in an end-to-end abutting arrangement or stack within the chamber 15 and biased against the bottom end plug 14 by the action of a spring 18 placed in the chamber 15 between the top of the pellet stack and the top end plug 13. In other instances fuel particles 6F, 6C, and 6E are used as the fuel form, as shown in rod 10B.

Transverse support grids are shown as 20 in Figure 2. They are not shown, for simplicity, in Figure 1. These support grids are axially spaced along the length of the plurality of fuel rods 10 such as 10A, 10B, 10C, and 10 D. Also shown, in Fig. 2, are instrumentation tube 22, top nozzle 24 and bottom nozzle 26.

Fig. 1 illustrates several preferred embodiments of the present fuel rod invention. As can be seen in Fig. 1, fuel rods 10 such as 10A, 10C, and 10 D have end-to-end arrangements, or segments/strings, of: sintered fuel pellets 6A containing no boron compound, provided at upper and lower end sections of the fuel pellet stack of the fuel rods 10 as an upper and lower axial blanket; the fuel rods 10 also have a string of the sintered fuel pellets 6B with a high level of the boron-containing compound provided at the middle section of the stack and, optionally, lower levels of the boron-containing compound as pellets 6D. In fuel rods, such as 10D, all fuel pellets 6A, contain no boron compound.

Optionally, the fuel rod 10B, can contain sintered particles 6C with high levels of boron containing compound and, optionally, sintered particles 6E with a lower concentration of boron containing compound, "lower boron segments". Particles 6F show sections of particles with no boron.

The lower concentrated boron containing pellets or particles are preferably on both sides of the high boron level materials. As can be seen in Fig. 1, in rod 10B, particles 30 of non-boron containing fuel are shown as open circles, and particles 32 of boron containing fuel are shown as darkened circles. Other fuel rods, such as 10D can contain pellets or particles containing no boron at all, such as use of all pellets 6A in fuel rod 10D. The lower boron segments 6D, in rod 10A or 6E in rod 10B containing particles, can be above, below or both above and below the high boron segments.

The relative concentration of boron compounds in the fuel pellets 6B and 6D are illustrated by high boron containing pellets 6B shown by wide darkened areas 34 and moderate boron containing pellets 6D shown by narrow darkened areas 36.

Thus, Figure 1 shows in idealized schematic fashion, sintered fuel pellets and sintered fuel particles surrounded by cladding, which can be metal or ceramic, where the fuel is an admixture of non-boron actinides and boron-containing compounds, preferably BN or B₄C. In the boron containing pellets 6B, 6D or particles 6C and 6E, boron concentration is shown, in idealized fashion, by darkened stripe areas 34 (high) and 36 (lower) or darkened circles 32 (high) and 33 (lower) and contain, as stated previously, from 0.1-1.5 mg boron, as ¹⁰B elemental boron, per 1 cm of fuel rod length. In fact the boron material would be homogenously distributed in high or lower concentrations through the pellet or particulate volume. As shown in Figure 1, at least 50% of the fuel rods, here 75% as fuel rods 10A, 10B and 10C contain the boron admixture. Fuel rod 10D contains only non-boron containing, sintered fuel pellets 6A.

By way of example only, Table 1 below provides information comparing an assembly of the present invention with prior art practice. As this example demonstrates, this approach significantly lowers the total boron concentration and the ¹⁰B concentration. Thus allowing more uranium in the fuel.

**Table 1**

| | *Original Rods With IFBA-coated Fuel (ZrB₂) | Rods with UB₄ (present invention) |
|---|---|---|
| Boron loading | 10 mg/inch | 325.5 ppm |
| Percent of all rods coated With ZrB₂ or containing UB₄ | 60% | 100% |
| Pellet diameter | 0.37 inches | 0.37 inches |
| UO₂ density | 10.47 gm/cm³ | 10.47 gm/cm³ |
| UO₂ loading | 18.43 gm UO₂/inch | 18.43 gm UO₂/inch |
| ¹⁰B loading | 108.5 ppm | 65.1 ppm |
| ¹⁰B level in total amount of Boron | 20% | 20% |
| Smeared ¹⁰B loading | 65.1 ppm | 65.1 ppm |
| Total B loading | 524.5 ppm | 325.5 ppm |
| UB₄ loading | | 2119 ppm UB₄ |
| % of pellets with IFBA or UB₄ | 100% | 100% |

| | | |
|---|---|---|
| *Comparative Example | | |

Whereas particular embodiments of this invention have been described above for purposes of illustration, it will be evident to those skilled in the art that numerous variations of the details of the present invention may be made without departing from the invention as defined in the appended claims.

## Claims

1. A plurality of fuel rods for use in a nuclear fuel assembly, each fuel rod containing fuel in a form selected from the group consisting of sintered fuel pellets and sintered fuel particles, and mixtures thereof, the fuel surrounded by cladding, wherein at least 50% of said fuel rods comprise a sintered admixture of components: (1) non-boron actinide carbide, non-boron: actinide oxide, or non-boron actinide nitride fuel compound and mixtures thereof, and (2) boron-containing compound(s) selected from the group consisting of BN, B₄C, ZrB₂, TiB₂, MoB₂, UB₂, UB₂, UB₃, UB₄, UB₁₂, PuB₂, PuB₄, PuB₁₂, ThB₂, and mixtures thereof, where the boron-containing compound(s) acts as integral burnable absorber, which is located as a middle string of pellets or particles between non-boron containing actinide compounds, wherein the same one or a multiplicity of actinides are used in the non-boron containing actinide compounds and in the boron-containing compound(s), so that the same actinide(s) are used throughout the fuel rod, to achieve a consistency of actinide throughout the fuel rod, and wherein component (2) contains from 0.1 mg to 1.5 mg boron as ¹⁰B per 1 cm of fuel rod length.

2. The plurality of fuel rods of Claim 1, wherein said actinide nitride compound is selected from the group consisting of UN, PuN, ThN, (U, P)N, (U, P, Th)N, and (U, Th)N and mixtures thereof.,

3. The plurality of fuel rods of Claim 1 or 2, wherein said actinide carbide compound is selected from the group consisting of UC, UC₂, PuC₂, ThC₂, (U, P)C₂, (U, P, Th)C₂, and (U, Th)C₂ and mixtures thereof.

4. The plurality of fuel rods of any of Claims 1 to 3, wherein said actinide oxide compound is selected from the group consisting of UO₂, PuO₂, ThO₂ and mixtures thereof.

5. The plurality of fuel rods of any of Claims 1 to 4, wherein said boron-containing compound(s) in said at least one fuel pellet comprises enriched boron, and the cladding is metal cladding.

6. The plurality of fuel rods of any of Claims 1 to 4, wherein the boron-containing compound(s) is selected from the group consisting of BN, B₄C, and mixtures thereof.

7. The plurality of fuel rods of any of Claims 1 to 6, wherein component (2) is in the form of at least one pellet.

8. The plurality of fuel rods of any of Claims 1 to 6, wherein component (2) is in the form of particles.

9. The plurality of fuel rods of any of Claims 1 to 8, wherein said boron-containing compound(s) in component (2) is present in either fuel particle or fuel pellet form in an amount of about 5 ppm to about 5 wt%, based on the total amount of fuel in said fuel pellet.

10. The plurality of fuel rods of any of Claims 1 to 8, wherein said boron-containing compound(s) in component (2) is present in either fuel particle or fuel pellet form in an amount of 10 ppm to about 20,000 ppm, based on the total amount of fissionable fuel component in said fuel pellet.

11. The plurality of fuel rods of any of Claims 1 to 8, wherein said boron-containing compound(s) in component (2) is present in either fuel particle or said fuel pellet form in an amount of about 66 ppm to about 7,000 ppm, based on the total amount of fissionable fuel component in said fuel pellet.

12. The plurality of fuel rods of Claim 11, wherein said boron-containing compound(s) in component (2) is present in either fuel particle or said fuel pellet form in an amount of about 13 ppm to about 1,200 ppm, based on the total amount of fissionable fuel component in said fuel pellet.

13. The plurality of fuel rods of any of Claims 1 to 12, wherein at least one fuel pellet in at least 60 to 70 % of said fuel rods in said fuel assembly comprises a sintered admixture of a non-boron containing actinide compound(s) and a boron-containing compound(s).

14. The plurality of fuel rods of Claim 13, wherein at least one fuel pellet in 60 % to 80% of said fuel rods in said fuel assembly comprises a sintered admixture of a non-boron containing actinide compound(s) and a boron-containing compound(s).

15. A fuel assembly containing the plurality of fuel rods of any of Claims 1 to 14.

16. A plurality of fuel rods, for use in a fuel assembly, each fuel rod containing a plurality of nuclear fuel pellets, wherein at least one pellet in at least 60% of said fuel rods in said fuel assembly comprises a sintered admixture of 1) an actinide compound selected from the group consisting of UC, UC₂, PuC₂, PuB₄, ThC₂, (U,P)C₂, (U, P, Th)C₂, (U,Th)C₂, UN, PuN, ThN, (U, P)N, (U, P, Th)N, (U, Th)N and mixtures thereof, and 2) a boron-containing compound selected from the group consisting of BN, B₄C, ZrB₂, TiB₂, MoB₂, UB₂, UBz, UB₃, UB₄, UB₁₂, PuB₂, PuB₄, PuB₁₂, ThB₂, (U,Pu) B₄, (U,Pu,Th) B₂ and mixtures thereof, where the boron-containing compound(s) acts as integral burnable absorber, located as a middle string of pellets between non-boron containing pellets where, the boron-containing compound(s) is constituted of the one or a multiplicity of actinides compounded with boron, wherein the same one or a multiplicity of actinides are used in the actinide compound and in the boron-containing compound, so that the same actinides are used in both compounds, to achieve a consistency of actinides throughout the fuel rod.
